# FASCICULE DE BREVET EUROPEEN

(11) **EP 2 778 438 B1**
(45) Date de publication et mention de la délivrance du brevet: **30.11.2016**
(21) Numéro de dépôt: 14000414.4
(22) Date de dépôt: 05.02.2014
(51) Int. Cl.: F15B 15/14

(54) **DISPOSITIF D'OBTURATION D'UN SYSTÈME HYDRAULIQUE, SYSTÈME HYDRAULIQUE ET AÉRONEF**
VERSCHLUSS EINES HYDRAULIKSYSTEMS, HYDRAULIKSYSTEM UND FLUGZEUG
PLUG DEVICE FOR HYDRAULIC SYSTEM, HYDRAULIC SYSTEM AND AIRCRAFT

(30) Priorité: 13.03.2013 FR 1300557
(43) Date de publication de la demande: 17.09.2014
(73) Titulaire: Airbus Helicopters, 13725 Marignane Cedex (FR)
(72) Inventeur: Bihel, Jean-Romain, F-13740 LE Rove (FR)
(74) Mandataire: GPI & Associés

(56) Documents cités:
- EP-A1- 2 243 976
- GB-A- 1 584 939
- US-A- 2 989 972

## Description

La présente invention concerne un dispositif d'obturation d'un système hydraulique, un tel système hydraulique et un aéronef comportant ce système hydraulique. Plus particulièrement, l'invention concerne une servocommande d'aéronef.

Les servocommandes sont notamment utilisées dans le domaine aéronautique pour le contrôle d'organes aérodynamiques. Par exemple, des servocommandes sont mises en oeuvre sur un hélicoptère pour contrôler le pas des pales du rotor de sustentation et de propulsion. En effet, un pilote peut alors transmettre un ordre aux servocommandes via des commandes de vol, les servocommandes agissant sur le pas des pales en fonction des ordres reçus.

Les servocommandes peuvent être des servocommandes hydrauliques. Les commandes de vol agissent alors sur un distributeur hydraulique qui contrôle l'acheminement d'un fluide vers au moins un corps de la servocommande. Par suite, une servocommande hydraulique comporte un circuit hydraulique.

Dès lors, une servocommande est usuellement munie d'un dispositif d'obturation de ce circuit hydraulique. Un tel dispositif d'obturation comprend un bouchon pour obturer un orifice du circuit hydraulique.

Selon un premier état de la technique, le bouchon est conformé à l'orifice, en étant par exemple de forme cylindrique. Un joint annulaire est disposé dans une gorge du bouchon pour assurer l'étanchéité entre ce bouchon et la paroi délimitant l'orifice.

De plus, le dispositif d'obturation comporte une collerette solidaire du bouchon. Le dispositif d'obturation peut être maintenu contre la servocommande par des vis fixant la collerette à ce corps. Un fil frein peut être utilisé pour freiner chaque vis.

Selon un deuxième état de la technique, le dispositif d'obturation comporte une portion filetée prolongeant le bouchon. La portion filetée coopère alors avec un taraudage du corps.

Un fil frein est alors utilisé pour relier la portion filetée au corps.

Ces états de la technique sont relativement coûteux en temps d'usinage, et longs à installer.

Selon un troisième état de la technique, le bouchon peut avoir une forme tronconique de dimensions légèrement supérieures aux dimensions de l'orifice à obturer. Le bouchon est alors inséré en force dans l'orifice selon la technique de montage connue sous l'expression « monté serré ».

Un tel bouchon est parfois rappelé « plug » en langue anglaise.

Ce type de montage est employé pour obturer des orifices de petit diamètre. De plus, le démontage du bouchon s'avère délicat.

Le document GB 1584939 présente une bague vissée à un logement.

Le document EP 2 243 976 présente une bague coincée entre un logement et un bouchon.

La présente invention a alors pour objet de proposer un dispositif d'obturation alternatif visant à autoriser un montage simple et/ou peu coûteux.

L'invention propose donc un dispositif d'obturation d'un système hydraulique, selon la revendication 1, dispositif d'obturation comprenant un bouchon.

De manière remarquable, le bouchon comporte une portion centrale coopérant avec une portion périphérique entourant cette portion centrale, le dispositif d'obturation incluant un anneau élastique d'arrêt ouvert apte à être inséré dans un alésage du système hydraulique. La portion centrale saille de la portion périphérique vers l'extérieur du système hydraulique pour ménager une gorge visible de l'extérieur, l'anneau élastique d'arrêt étant logé dans cette gorge et apte à être logé dans l'alésage, la portion périphérique butant axialement contre l'anneau élastique et la portion centrale bloquant radialement l'anneau élastique lorsque le dispositif d'obturation est correctement positionné.

On rappelle qu'un anneau élastique d'arrêt est un anneau ouvert permettant de bloquer axialement un objet. Un tel anneau élastique d'arrêt est classiquement dénommé « circlip ». Un tel anneau peut être plat, contrairement à une bague de retenue vissée à un logement par exemple.

Pour obturer une cavité d'un système hydraulique, un opérateur place alors le bouchon dans cette cavité, puis insère l'anneau élastique.

A l'issue de l'installation, l'anneau élastique doit se trouver dans la gorge ménagée par le dispositif d'obturation, en étant agencé contre une surface de contact de la portion périphérique du bouchon.

La mise en place du dispositif d'obturation est donc aisée, en ne nécessitant pas l'agencement d'un freinage particulier (fil frein...) ou un montage serré par exemple. Le maintien du dispositif d'obturation est garanti par le blocage axial de l'anneau élastique dans l'alésage.

De plus, un opérateur peut s'assurer visuellement de la bonne installation du dispositif d'obturation. En effet, si l'anneau élastique n'est pas correctement plaqué contre la portion périphérique, cet opérateur en déduit que le dispositif d'obturation n'est pas correctement agencé.

Il est à noter que les anneaux élastiques d'arrêt sont utilisés dans l'industrie de manière générale, mais sont peu voire pas utilisés dans le domaine aéronautique. L'utilisation d'un tel anneau dans le cadre par exemple d'une servocommande d'aéronef n'a alors rien d'évident.

En effet et selon les préjugés en vigueur, il est difficile de s'assurer qu'un anneau élastique d'arrêt est correctement positionné. Cette première difficulté est résolue par l'invention qui propose un agencement autorisant un simple contrôle visuel.

De plus, selon ces préjugés, le maintien d'un anneau élastique d'arrêt dans la position requise est délicat à garantir dans le cadre d'un aéronef soumis à de fortes vibrations. Cette deuxième difficulté est résolue par l'introduction d'un effort axial exercé par la paroi périphérique sur l'anneau élastique d'arrêt, et par l'introduction d'un blocage radial dans le plan de l'anneau par la paroi centrale notamment.

L'invention tend donc à lever les préjugés ayant terni l'image des anneaux élastiques d'arrêt dans le domaine aéronautique, jusqu'à quasiment empêcher leur utilisation dans ce domaine technique particulier.

L'invention propose donc un dispositif d'obturation simple en rupture des idées préconçues courantes, ce dispositif d'obturation étant associé à un procédé de montage simple et peu onéreux.

Ce dispositif d'obturation peut comporter une ou plusieurs des caractéristiques additionnelles qui suivent.

Selon une version, un fluide peut éventuellement partiellement fuir en passant entre le bouchon et le système hydraulique. Le dispositif d'obturation n'est alors pas totalement étanche. Une telle fuite peut éventuellement être maitrisée et drainée par exemple.

Cependant, selon une version alternative, le dispositif d'obturation peut comporter un joint périphérique pour assurer une étanchéité entre le bouchon et le système hydraulique. Un joint périphérique est par exemple agencé entre la portion périphérique et la paroi interne délimitant la cavité à obturer.

Selon un premier mode de réalisation, la portion centrale et la portion périphérique sont solidaires l'une de l'autre, la portion périphérique représentant au moins un épaulement de la portion centrale.

Le bouchon est par exemple réalisé d'un seul tenant de manière à présenter d'une part la portion centrale et, d'autre part, la portion périphérique.

Cette portion périphérique peut comporter un épaulement supérieur et un épaulement inférieur de la portion centrale qui sont séparés par un logement annulaire. Un joint périphérique peut alors être agencé dans ce logement annulaire pour assurer une étanchéité entre le bouchon et le système hydraulique. L'épaulement supérieur est alors en contact avec l'anneau élastique d'arrêt lorsque le dispositif d'obturation est correctement positionné.

Selon un deuxième mode de réalisation, la portion centrale coulisse dans la portion périphérique.

Par exemple, la portion centrale comporte une tige du système hydraulique, telle qu'une tige portant un piston. La portion centrale du bouchon est donc un élément fonctionnel mobile du système hydraulique.

Eventuellement, le dispositif d'obturation comporte un joint interne interposé entre la portion centrale et la portion périphérique. Néanmoins, il est possible de ne pas implémenter un tel joint interne, en tolérant une éventuellement fuite maitrisée et drainée.

Par ailleurs pour garantir que la portion périphérique est correctement positionnée et selon une première variante, le dispositif d'obturation comporte une butée ménagée dans le système hydraulique, la portion périphérique étant en contact contre la butée et l'anneau élastique d'arrêt dans des conditions normales.

Ainsi, un opérateur appuie sur la portion périphérique pour l'accoler à la butée.

Selon une deuxième variante, le dispositif d'obturation comporte un moyen de rappel pour tendre à pousser la portion périphérique en dehors du système hydraulique.

Lors de la mise en place du dispositif d'obturation, l'opérateur exerce une pression sur la portion périphérique pour comprimer le moyen de rappel. Dès lors, l'opérateur peut insérer l'anneau élastique d'arrêt dans l'alésage du système hydraulique prévu à cet effet. L'opérateur relâche ensuite la portion périphérique. Le moyen de rappel exerce par suite un effort sur cette portion périphérique pour la plaquer contre l'anneau élastique d'arrêt.

Si la portion périphérique n'est pas correctement plaquée contre cet anneau élastique d'arrêt, l'opérateur en conclut que le dispositif d'obturation est mal positionné et recommence son installation.

Le moyen de rappel peut être un fluide présent dans la cavité à obturer, la pression du fluide dans cette cavité permettant d'exercer la force de rappel requise. Le fluide peut être un liquide ou un gaz.

De manière alternative, le moyen de rappel est un ressort interposé entre la portion périphérique et un siège du système hydraulique.

Par ailleurs, la portion périphérique peut comprendre une surface de contact conformée à l'anneau élastique d'arrêt afin que l'anneau élastique d'arrêt soit inscrit dans la portion périphérique lorsque le dispositif d'obturation est correctement positionné dans la gorge.

Cette caractéristique facilite l'inspection visuelle du dispositif d'obturation.

L'invention vise aussi un système hydraulique muni d'un circuit hydraulique comportant une cavité ouverte sur l'extérieur du système hydraulique. Ce système hydraulique comporte alors un dispositif d'obturation du type décrit précédemment pour obturer ladite cavité.

Le système hydraulique peut être de manière intéressante une servocommande d'aéronef.

De même, l'invention vise un aéronef ayant un dispositif d'obturation du type décrit précédemment.

L'invention et ses avantages apparaîtront avec plus de détails dans le cadre de la description qui suit avec des exemples de réalisation donnés à titre illustratif en référence aux figures annexées qui représentent :
- la figure 1, un schéma présentant un aéronef muni d'une servocommande selon l'invention,
- les figures 2 à 6, des schémas explicitant un premier mode de réalisation,
- les figures 7 à 10, des schémas explicitant un deuxième mode de réalisation, et
- la figure 11, un schéma présentant une portion périphérique conformée à la forme d'un anneau élastique.

Les éléments présents dans plusieurs figures distinctes sont affectés d'une seule et même référence.

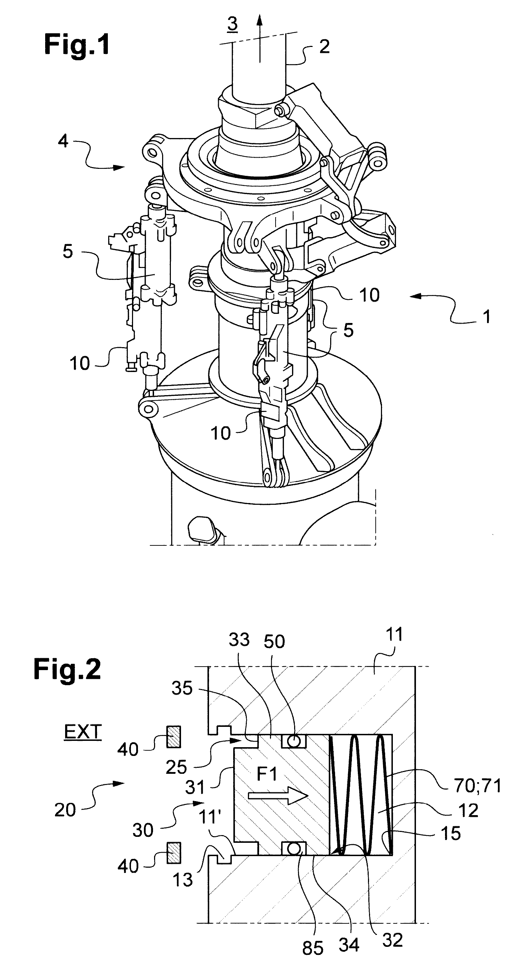

La figure 1 présente un aéronef 1. Cet aéronef 1 comporte un système hydraulique 5 selon l'invention.

Plus particulièrement, l'aéronef 1 est pourvu d'un mât 2 entraînant en rotation un rotor 3, tel que le rotor de sustentation et de propulsion d'un hélicoptère. Ce rotor 3 comporte une pluralité de pales. L'aéronef 1 est alors muni d'un ensemble 4 de plateaux cycliques pour contrôler le pas des pales du rotor 3.

Plusieurs systèmes hydrauliques 5 de type servocommande 10 peuvent alors être utilisés pour manoeuvrer l'ensemble 5 de plateaux cycliques. L'invention peut toutefois s'appliquer à d'autres types de système hydraulique.

En référence à la figure 2, le système hydraulique est muni d'un circuit hydraulique possédant notamment une cavité 12 ménagée dans un corps 11. Cette cavité 12 est remplie par un fluide.

Dès lors, le système hydraulique est pourvu d'un dispositif d'obturation 20 pour obturer la cavité 12, et l'isoler d'un milieu extérieur au système hydraulique dénommé par commodité « extérieur EXT ».

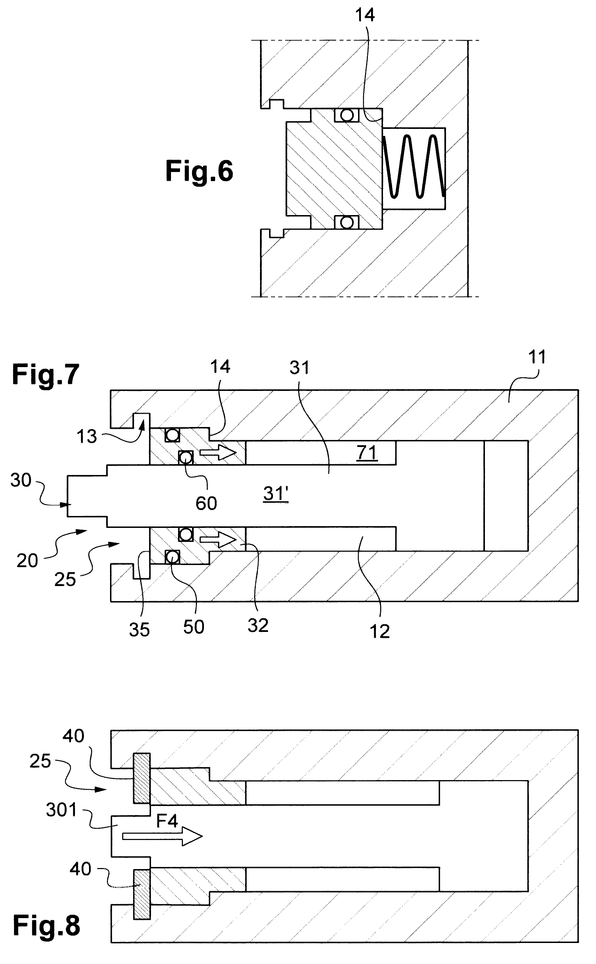

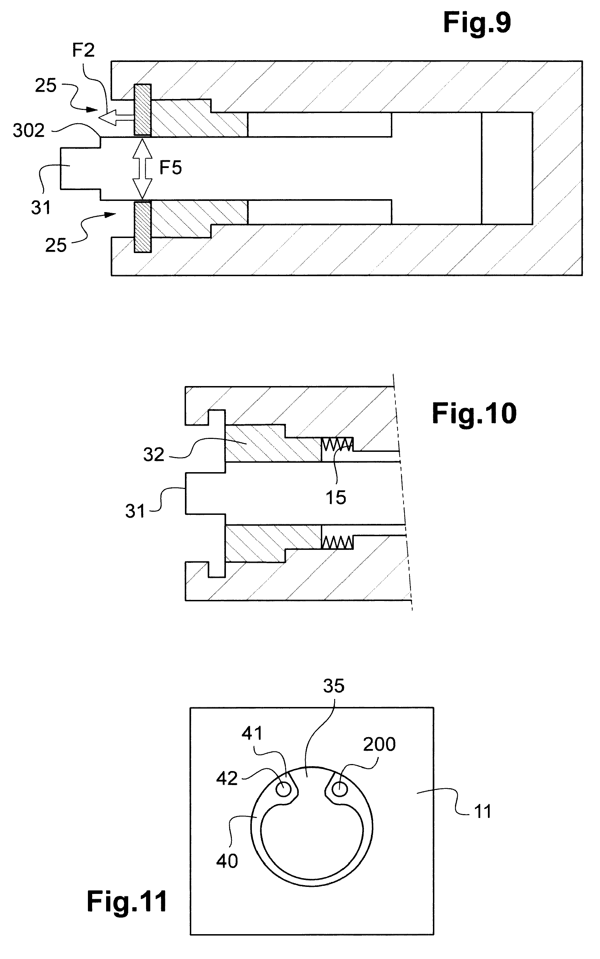

Les figures 2 à 6 présentent un premier mode de réalisation, les figures 7 à 10 présentant un deuxième mode de réalisation de ce dispositif d'obturation. La figure 11 montre une variante applicable aux deux modes de réalisation.

En référence à la figure 2 et indépendamment du mode de réalisation, le dispositif d'obturation 10 comporte un bouchon 30 pour obturer la cavité 12.

Le bouchon 30 est donc conformé à la cavité 12, en étant de forme cylindrique selon l'exemple représenté.

Ce bouchon 30 comprend une portion centrale 31 et une portion périphérique 32. La portion périphérique 32 est disposée autour de la portion centrale 31 pour coulisser le long d'une face interne 11' du corps 11.

Eventuellement, le dispositif d'obturation 20 comporte un joint périphérique 50 pour assurer l'étanchéité entre le bouchon 30 et le système hydraulique, plus précisément entre le bouchon 30 et la face interne 11' délimitant la cavité 12 à obturer.

Par ailleurs, la portion centrale 31 saille de la portion périphérique 32 vers l'extérieur EXT notamment.

Ainsi, le bouchon 30 présente une gorge 25 délimitée par une surface de la portion périphérique 32 en regard de l'extérieur EXT dénommée « surface de contact 35 ». La gorge 25 est donc ouverte sur l'extérieur EXT et visible de l'extérieur EXT.

Selon le premier mode de réalisation de la figure 2, la portion centrale 31 et la portion périphérique 32 sont solidaires l'une de l'autre. Le bouchon est par exemple une pièce monobloc pouvant être décomposée fonctionnellement en une portion centrale et une portion périphérique.

La portion périphérique 32 inclut alors par exemple au moins un épaulement 33, 34 de la portion centrale 31.

Ainsi, le bouchon comprend un épaulement supérieur 33 et un épaulement inférieur 34 s'étendant à partir de la paroi périphérique de la portion centrale vers la face interne 11'. Chaque épaulement peut être un anneau disposé autour de la portion centrale.

Dès lors, l'épaulement supérieur 33 et l'épaulement inférieur 34 représentent au moins en partie la portion périphérique 32. L'épaulement supérieur 33 est alors muni de la surface de contact 35.

De plus, l'épaulement supérieur 33 et l'épaulement inférieur 34 sont séparés par un logement annulaire 85. Le joint périphérique 50 est ainsi agencé dans le logement annulaire 85.

Selon le deuxième mode de réalisation de la figure 7, la portion centrale 31 coulisse dans la portion périphérique 32.

En effet, la portion centrale 31 peut être une tige 31' du système hydraulique, telle qu'une tige portant un piston évoluant dans la cavité 12.

La portion périphérique représente un palier placé autour de la portion centrale.

Cette portion périphérique peut à l'instar du mode de réalisation de la figure 2 présenter un épaulement supérieur, un épaulement inférieur et un logement accueillant un joint périphérique.

De plus, un joint interne 60 peut être interposé entre la portion centrale et la portion périphérique. Néanmoins, il est possible de ne pas implémenter un tel joint interne, à l'instar de l'exemple des figures 8 et 9.

En référence à le figure 2 et indépendamment du mode de réalisation, le dispositif d'obturation est en outre muni d'un anneau élastique d'arrêt 40 ouvert. Cet anneau élastique d'arrêt est destiné à être inséré dans l'alésage 13 tout en étant disposé dans la gorge 25 périphérique du bouchon 30.

L'anneau élastique a alors pour fonction de maintenir le bouchon 30 dans la cavité 12.

Par ailleurs selon une variante schématisée sur les figures 2 et 10 notamment, le dispositif d'obturation 20 comporte un moyen de rappel 70 pour exercer une pression sur la portion périphérique 32 afin de la plaquer contre l'anneau élastique d'arrêt.

Le moyen de rappel peut comprendre le fluide sous pression contenu dans la cavité 12, voire un ressort 71 ou équivalent interposé entre la portion périphérique 32 et un siège 15 du système hydraulique 5.

Selon une variante schématisée sur les figures 6 et 7 notamment, le dispositif d'obturation 20 comporte une butée 14 ménagée dans le système hydraulique 5. La portion périphérique 32 du bouchon peut être agencée entre la butée 14 et l'anneau élastique d'arrêt 40.

Selon la variante de la figura 6, la butée 14 permet de limiter le déplacement axial du bouchon, notamment afin d'éviter de pousser le bouchon trop loin lors du montage.

Selon la variante de la figure 7, la butée permet aussi de bloquer axialement la portion périphérique 32. Cette butée assure le bon positionnement de la portion périphérique.

Les figures 2 à 5 explicitent le procédé appliqué par un opérateur selon une variante du premier mode de réalisation.

En référence à la figure 2, l'opérateur agence le cas échéant le moyen de rappel 70 puis le bouchon 30 dans la cavité 12. Dès lors, l'opérateur exerce un effort sur le bouchon pour l'enfoncer dans la cavité selon la flèche F1. Le moyen de rappel 70 est alors comprimé.

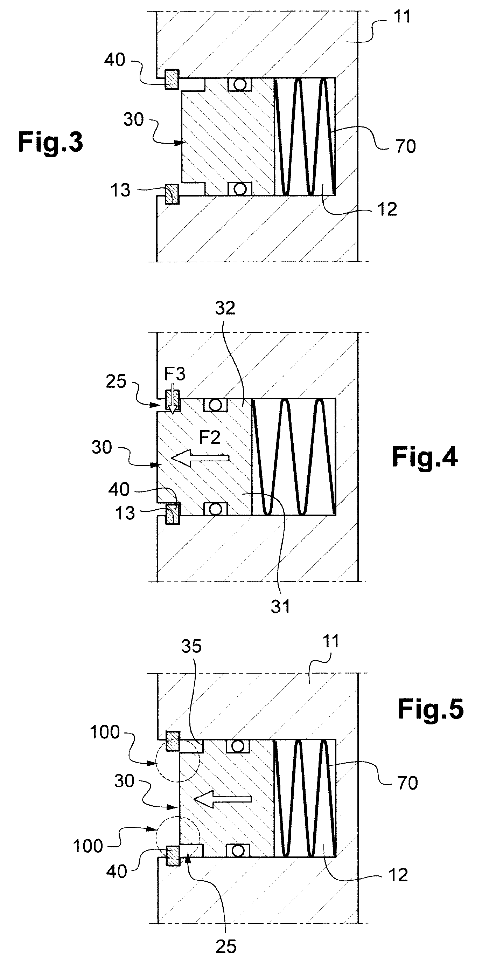

En référence à la figure 3, l'opérateur maintient son effort sur le bouchon pour comprimer le moyen de rappel 70, et positionne l'anneau élastique d'arrêt 40 dans l'alésage 13 du corps 11.

En référence à la figure 4, l'opérateur relâche ensuite le bouchon 30. Le moyen de rappel se détend et pousse le bouchon 30 vers l'extérieur EXT selon la flèche F2.

Si le dispositif d'obturation est correctement positionné, la portion périphérique 32 bute axialement avec sa surface de contact contre l'anneau élastique d'arrêt 40 selon la flèche F2. De plus, la portion centrale 31 bloquant radialement l'anneau élastique d'arrêt 40 selon la flèche F3. L'anneau élastique d'arrêt 40 est ainsi bloqué dans la gorge 25.

Ce bon positionnement peut facilement être visualisé par l'opérateur.

En effet, et en référence à la figure 5, si l'anneau élastique d'arrêt 40 est mal positionné, cet anneau élastique d'arrêt peut entrer en contact avec la portion centrale 31 dans les zones 100, au lieu d'être agencé dans la gorge 25. Cette position peut facilement être identifiée visuellement.

Pour mettre en oeuvre la variante de la figure 6, l'opérateur plaque le bouchon contre la butée 14 puis positionne l'anneau élastique d'arrêt.

Les figures 7 à 9 explicitent le procédé appliqué par un opérateur selon une variante du deuxième mode de réalisation.

En référence à la figure 7, l'opérateur agence la portion périphérique 32 autour de la portion centrale 31.

Dès lors, l'opérateur exerce un effort sur la portion périphérique pour plaquer la portion périphérique contre une butée 14.

En référence à la figure 8, la portion centrale 31 peut être affinée à son extrémité libre 301. L'opérateur pousse alors la portion centrale dans la cavité 12 pour maximiser la largeur de la gorge 25 selon la flèche F4. L'opérateur peut alors agencer l'anneau élastique 40 dans l'alésage prévu à cet effet.

En référence à la figure 9, l'opérateur relâche ensuite la portion centrale 31 pour faire saillir une portion élargie 302 de la portion centrale 31 par rapport à la portion périphérique.

L'opérateur peut éventuellement tirer la portion centrale à cet effet.

Si le dispositif d'obturation est correctement positionné, la portion périphérique 32 bute axialement avec sa surface de contact contre l'anneau élastique d'arrêt 40 selon la flèche F2. De plus, la portion élargie 302 de la portion centrale 31 bloque radialement l'anneau élastique d'arrêt 40 selon la direction F5. L'anneau élastique d'arrêt 40 est ainsi bloqué dans la gorge 25.

Ce bon positionnement peut facilement être visualisé par l'opérateur.

La variante de la figure 10 peut être mise en place selon un procédé similaire au procédé décrit précédemment.

Par ailleurs et en référence à la figure 11, la portion périphérique 32 peut comprendre une surface de contact 35 conformée à l'anneau élastique d'arrêt 40.

Dès lors et lorsque le dispositif d'obturation 20 est correctement positionné, l'anneau élastique d'arrêt est inscrit dans le bouchon en pénétrant dans la surface de contact. L'anneau élastique est ainsi placé dans un évidement du bouchon.

Le maintien en position de l'anneau élastique d'arrêt est alors optimisé.

De plus, l'anneau élastique d'arrêt peut être muni de deux oreilles 41 comprenant chacune une perforation 42. La portion périphérique est alors munie d'une excroissance pénétrant dans chaque perforation 42.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif d'obturation (20) d'un système hydraulique (5) destiné à un aéronef, ledit dispositif d'obturation (20) comprenant un bouchon (30), ledit bouchon (30) comportant une portion centrale (31) coopérant avec une portion périphérique (32) entourant ladite portion centrale (31), ladite portion centrale (31) saillant de ladite portion périphérique (32) vers l'extérieur (EXT) du système hydraulique (5) pour ménager une gorge (25) visible de l'extérieur (EXT), **caractérisé en ce que** le dispositif d'obturation inclut un anneau élastique d'arrêt (40) ouvert apte à être inséré dans un alésage (13) du système hydraulique, ledit anneau élastique d'arrêt (40) étant logé dans cette gorge (25) et apte à être logé dans l'alésage, ladite portion périphérique (32) butant axialement contre l'anneau élastique d'arrêt (40) et ladite portion centrale (31) bloquant radialement ledit anneau élastique d'arrêt (40) lorsque le dispositif d'obturation est correctement positionné.

2. Dispositif selon la revendication 1,
**caractérisé en ce que** ledit dispositif d'obturation (20) comporte un joint périphérique (50) pour assurer une étanchéité entre ledit bouchon (30) et ledit système hydraulique (5).

3. Dispositif selon l'une quelconque des revendications 1 à 2,
**caractérisé en ce que** ladite portion centrale (31) et ladite portion périphérique (32) sont solidaires l'une de l'autre, ladite portion périphérique (32) représentant au moins un épaulement (33, 34) de ladite portion centrale (31).

4. Dispositif selon l'une quelconque des revendications 1 à 3,
**caractérisé en ce que** ladite portion périphérique (32) comporte un épaulement supérieur (33) et un épaulement inférieur (34) de la portion centrale (31) qui sont séparés par un logement annulaire (85, un joint périphérique (50) étant agencé dans ledit logement annulaire (85) pour assurer une étanchéité entre ledit bouchon (30) et ledit système hydraulique (5), ledit épaulement supérieur (33) devant être en contact avec ledit anneau élastique d'arrêt (40).

5. Dispositif selon l'une quelconque des revendications 1 à 2,
**caractérisé en ce que** ladite portion centrale (31) coulisse dans ladite portion périphérique (32).

6. Dispositif selon la revendication 5,
**caractérisé en ce que** ladite portion centrale (31) comporte une tige (31') dudit système hydraulique (5).

7. Dispositif selon l'une quelconque des revendications 5 à 6,
**caractérisé en ce que** ledit dispositif d'obturation (20) comporte un joint interne (60) interposé entre ladite portion centrale (31) et ladite portion périphérique (32).

8. Dispositif selon l'une quelconque des revendications 1 à 7,
**caractérisé en ce que** ledit dispositif d'obturation (20) comporte une butée (14) ménagée dans le système hydraulique (5), ladite portion périphérique (32) étant en contact contre ladite butée (14) et ledit anneau élastique d'arrêt (40).

9. Dispositif selon l'une quelconque des revendications 1 à 8,
**caractérisé en ce que** ledit dispositif d'obturation (20) comporte un moyen de rappel (70) pour tendre à pousser ladite portion périphérique (32) en dehors du système hydraulique (5).

10. Dispositif selon la revendication 9,
**caractérisé en ce que** ledit moyen de rappel (70) est un ressort (71) interposé entre la portion périphérique (32) et un siège (15) du système hydraulique (5).

11. Dispositif selon l'une quelconque des revendications 1 à 10,
**caractérisé en ce que** ladite portion périphérique (32) comprend une surface de contact (35) conformée à l'anneau élastique d'arrêt (40) afin que ledit anneau élastique d'arrêt (40) soit inscrit dans la portion périphérique (32) lorsque le dispositif d'obturation (20) est correctement positionné dans la gorge (25).

12. Dispositif selon l'une quelconque des revendications 1 à 11,
**caractérisé en ce que** ledit anneau est plat.

13. Système hydraulique (5) muni d'un circuit hydraulique comportant une cavité (12) ouverte sur l'extérieur (EXT) du système hydraulique (5),
**caractérisé en ce que** le système hydraulique (5) comporte un dispositif d'obturation (20) selon l'une quelconque des revendications 1 à 12 pour obturer ladite cavité (12).

14. Système hydraulique selon la revendication 13,
**caractérisé en ce que** le système hydraulique (5) est une servocommande (10) d'aéronef.

15. Aéronef (1),
**caractérisé en ce que** cet aéronef (1) comporte un système hydraulique (5) selon l'une quelconque des revendications 13 à 14.

## Patentansprüche

1. Verschluss (20) eines Hydrauliksystems (5) für ein Luftfahrzeug, wobei der Verschluss (20) einen Stöpsel (30) aufweist, wobei der Stöpsel (30) einen zentralen Bereich (31) aufweist, der mit einem Randbereich (32) zusammenwirkt, der den zentralen Bereich (31) umgibt, wobei der zentrale Bereich (31) gegenüber dem Randbereich (32) zur Außenseite (EXT) des Hydrauliksystems (5) hin vorspringt, um eine von außen (EXT) sichtbare Hohlkehle (25) zu bilden,
**dadurch gekennzeichnet, dass** der Verschluss einen offenen elastischen Stopperring (40) umfasst, der in eine Ausdrehung (13) des Hydrauliksystem eingefügt werden kann, wobei der elastische Stopperring (40) in dieser Hohlkehle (25) gelagert ist und in der Ausdrehung gelagert werden kann, wobei der Randbereich (32) axial gegen den elastischen Stopperring (40) anschlägt und der zentrale Bereich (31) radial den elastischen Stopperring (40) blockiert, wenn der Verschluss richtig positioniert ist.

2. Verschluss nach Anspruch 1,
**dadurch gekennzeichnet, dass** der Verschluss (20) eine Umfangsdichtung (50) aufweist, um eine Dichtigkeit zwischen dem Stöpsel (30) und dem Hydrauliksystem (5) sicherzustellen.

3. Verschluss nach einem der Ansprüche 1 bis 2,
**dadurch gekennzeichnet, dass** der zentrale Bereich (31) und der Umfangsbereich (32) miteinander fest verbunden sind, wobei der Umfangsbereich (32) mindestens eine Schulter (33, 34) des zentralen Bereichs (31) aufweist.

4. Verschluss nach einem der Ansprüche 1 bis 3,
**dadurch gekennzeichnet, dass** der Umfangsbereich (32) eine obere Schulter (33) und eine untere Schulter (34) des zentralen Bereichs (31) aufweist, die durch ein Ringlager (85) voneinander getrennt sind, wobei eine Umfangsdichtung (50) in dem Ringlager (85) angeordnet ist, um eine Dichtheit zwischen dem Stöpsel (30) und dem Hydrauliksystem (5) sicherzustellen, wobei die obere Schulter (33) in Kontakt mit dem elastischen Stopperring (40) stehen muss.

5. Verschluss nach einem der Ansprüche 1 bis 2,
**dadurch gekennzeichnet, dass** der zentrale Bereich (31) in dem Umfangsbereich (32) gleitet.

6. Verschluss nach Anspruch 5,
**dadurch gekennzeichnet, dass** der zentrale Bereich (31) eine Stange (31') des Hydrauliksystems (5) aufweist.

7. Verschluss nach einem der Ansprüche 5 bis 6,
**dadurch gekennzeichnet, dass** der Verschluss (20) eine innere Dichtung (60) aufweist, die zwischen dem zentralen Bereich (31) und dem Umfangsbereich (32) angeordnet ist.

8. Verschluss nach einem der Ansprüche 1 bis 7,
**dadurch gekennzeichnet, dass** der Verschluss (20) einen Anschlag (14) aufweist, der in dem Hydrauliksystem (5) ausgebildet ist, wobei der Umfangsbereich (32) gegen den Anschlag (14) und gegen den elastischen Stopperring (40) andrückt.

9. Verschluss nach einem der Ansprüche 1 bis 8,
**dadurch gekennzeichnet, dass** der Verschluss (20) ein Rückholmittel (70) aufweist, um den Umfangsbereich (32) aus dem Hydrauliksystem (5) herauszudrücken.

10. Verschluss nach Anspruch 9,
**dadurch gekennzeichnet, dass** das Rückholmittel (70) eine Feder (71) ist, die zwischen dem Umfangsbereich (32) und einem Sitz (15) des Hydrauliksystems (5) angeordnet ist.

11. Verschluss nach einem der Ansprüche 1 bis 10,
**dadurch gekennzeichnet, dass** der Umfangsbereich (32) eine Kontaktfläche (35) aufweist, die an den elastischen Stopperring (40) angepasst ist, damit der elastische Stopperring (40) in den Umfangsbereich (32) eingeschrieben ist, wenn der Verschluss (20) richtig in der Hohlkehle (25) positioniert ist.

12. Verschluss nach einem der Ansprüche 1 bis 11,
**dadurch gekennzeichnet, dass** der Ring flach ist.

13. Hydrauliksystem (5) mit einem Hydraulikkreis mit einem zur Außenseite (EXT) des Hydrauliksystems (5) offenen Hohlraum (12),
**dadurch gekennzeichnet, dass** das Hydrauliksystem (5) einen Verschluss (20) nach einem der Ansprüche 1 bis 12 aufweist, um den Hohlraum (12) zu verschließen.

14. Hydrauliksystem nach Anspruch 13,
**dadurch gekennzeichnet, dass** das Hydrauliksystem (5) eine Servosteuerung (10) eines Luftfahrzeugs ist.

15. Luftfahrzeug (1).
**dadurch gekennzeichnet, dass** das Luftfahrzeug (1) ein Hydrauliksystem (5) nach einem der Ansprüche 13 bis 14 aufweist.

## Claims

1. Plugging device (20) for a hydraulic system (5) intended for an aircraft, said plugging device (20) comprising a plug (30), said plug (30) comprising a central portion (31) cooperating with a peripheral portion (32) surrounding said central portion (31), said central portion (31) projecting from said peripheral portion (32) towards the outside (EXT) of the hydraulic system (5) to form a groove (25) visible from the outside (EXT),
**characterised in that** the plugging device includes an open elastic stop ring (40) suitable for being inserted into a bore (13) of the hydraulic system, said elastic stop ring (40) being housed in the groove (25) and suitable for being housed in the bore, said peripheral portion (32) axially abutting against the elastic stop ring (40) and said central portion (31) radially blocking said elastic stop ring (40) when the plugging device is correctly positioned.

2. Device according to Claim 1,
**characterised in that** said plugging device (20) comprises a peripheral seal (50) for ensuring sealing between said plug (30) and said hydraulic system (5).

3. Device according to any one of Claims 1 to 2,
**characterised in that** said central portion (31) and said peripheral portion (32) are integral with one another, said peripheral portion (32) representing at least one shoulder (33, 34) of said central portion (31).

4. Device according to any one of Claims 1 to 3,
**characterised in that** said peripheral portion (32) comprises an upper shoulder (33) and a lower shoulder (34) of the central portion (31) which are separated by an annular housing (85), a peripheral seal (50) being arranged in said annular housing (85) to ensure sealing between said plug (30) and said hydraulic system (5), said upper shoulder (33) having to be in contact with said elastic stop ring (40).

5. Device according to any one of Claims 1 to 2,
**characterised in that** said central portion (31) slides in said peripheral portion (32).

6. Device according to Claim 5,
**characterised in that** said central portion (31) comprises a rod (31') of said hydraulic system (5).

7. Device according to any one of Claims 5 to 6,
**characterised in that** said plugging device (20) comprises an inner seal (60) interposed between said central portion (31) and said peripheral portion (32).

8. Device according to any one of Claims 1 to 7,
**characterised in that** said plugging device (20) comprises a limit stop (14) formed in the hydraulic system (5), said peripheral portion (32) being in contact against said limit stop (14) and said elastic stop ring (40).

9. Device according to any one of Claims 1 to 8,
**characterised in that** said plugging device (20) comprises a return means (70) for tending to push said peripheral portion (32) outside the hydraulic system (5).

10. Device according to Claim 9,
**characterised in that** said return means (70) is a spring (71) interposed between the peripheral portion (32) and a seat (15) of the hydraulic system (5).

11. Device according to any one of Claims 1 to 10,
**characterised in that** said peripheral portion (32) comprises a contact surface (35) conformed to the elastic stop ring (40) so that said elastic stop ring (40) is inscribed in the peripheral portion (32) when the plugging device (20) is correctly positioned in the groove (25).

12. Device according to any one of Claims 1 to 11,
**characterised in that** said ring is flat.

13. Hydraulic system (5) provided with a hydraulic circuit comprising a cavity (12) open to the outside (EXT) of the hydraulic system (5),
**characterised in that** the hydraulic system (5) comprises a plugging device (20) according to any one of Claims 1 to 12 for plugging said cavity (12).

14. Hydraulic system according to Claim 13,
**characterised in that** the hydraulic system (5) is an aircraft servocontrol (10).

15. Aircraft (1),
**characterised in that** the aircraft (1) comprises a hydraulic system (5) according to any one of Claims 13 to 14.
